# EUROPEAN PATENT SPECIFICATION

(11) **EP 0 796 454 B1**
(45) Date of publication and mention of the grant of the patent: **15.05.2002**
(21) Application number: 95940970.7
(22) Date of filing: 05.12.1995
(51) Int. Cl.: G02C 1/02, G02C 5/22

(54) **RIMLESS SPECTACLES**
RANDLOSE BRILLE
LUNETTES SANS CERCLES

(30) Priority: 06.12.1994 DK 45694
(43) Date of publication of application: 24.09.1997
(73) Proprietor: FN Optik A/S, 6700 Esbjerg (DK)
(72) Inventor: Nielsen, Finn, 6710 Esbjerg (DK)
(74) Representative: Larsen, Hans Ole
(86) International application number: DK9500489
(87) International publication number: WO9618127

(56) References cited:
- EP-A- 0 611 978
- WO-A-87/04806
- WO-A-92/08158
- WO-A-95/18985
- US-A- 943 085

## Description

### Background of the invention

The invention relates to a pair of spectacles as disclosed in the preamble of claim 1.

It is known to make spectacles or spectacle frames of metal. Examples of such spectacles are known from usual spectacles where the spectacles typically consist of a frame enclosing the lenses, and two spectacle side bars being pivotally connected to the outer rim of the frame and typically being secured by means of a screw.

Also more elegant solutions are known where the spectacle frame consists of a thin metal wire where the actual frame is for instance made in one piece.

Likewise, it is known to manufacture rimless spectacles, in that the side bars and the bridge of the spectacles are secured directly to the lenses.

The latter spectacle types are typically lightweight glasses, in which an elegant design is to be combined with a durable configuration. This is often difficult since these factors will easily tend to counteract one another. The weak points of such a pair of spectacles will often be the quality of the hinging or the actual fitting of the side bars or bridge to the lenses.

From EP 0 256 098 and WO 87/04806 there is known a pair of spectacles in which the hinge between side bar and frame or lens consists of a first hinge portion comprising an ended pintle portion of metal wire, and a second hinge portion consisting of a coil which is wound around the pintle portion. The hinge applied in this configuration has the disadvantage, however, that it does not have a maximum angle of turning, which means that in use the side bars will not be held in their most expedient position. The actual fitting of the lenses is done by inserting a bent wire portion into a recess in the spectacle lens so that the bent wire portion exerts an outward force against the internal side of the recess in order that this spring force secures the bend in the recess. The disadvantage of this construction is, however, that the outward force of the metal bend is difficult to dimension correctly which means that the lenses may be likely to fall out when insufficiently fixed, or that the lenses break when tightened.

From the patent EP 0 554 341 and WO 92/08158 there is also known a pair of spectacles of the above-referenced type. In this construction the side bars are secured to the lenses by means of a screw. This solution is inexpedient, partly from a design-wise point of view, but the configuration also requires a demanding processing of both fitting part and lenses. Finally, this fastening is not good at absorbing forces around the side bars.

Besides, the spectacle frame has the same disadvantage as regards the hinges as those of the former publication.

### Object of the invention

The above disadvantages are overcome by means of spectacles having the features as disclosed in the characterising portion of claim 1.

It should also be noted that it is not decisive whether both ends of the pintle portion lead into a fitting end.

By configuring both the first and the second hinge portion from one piece of a wire-like metal as disclosed in claim 2, a particularly advantageous embodiment is obtained. The above advantages are combined with the fact that the two fitting ends absorb forces to the optimum extent from lens as well as from the second hinge portion.

As disclosed in claim 3, by letting the fitting ends be directly riveted or glued to the lenses in that the fitting ends are passed through pre-prepared holes in these, a stable and reliable fitting of the hinge to the lens is obtained. Thus, the forces between the lens and the hinge will primarily be oriented in the direction between front and backside of the lens. Since the two fitting ends also discourage the hinge from turning around its own axis when impacted on by a force, the fastening of the hinge will not be impaired during longer periods of impact. Add to this that the hinge can be fitted also on thin lenses, i.e. lenses of a thickness below 2.5 mm as opposed to the known frames which require lens thicknesses of more than 2.5 mm.

As disclosed in claim 4, by configuring the bridge of two adjacent wire pieces which at their ends are secured to holes in the lens, a rigid connection between bridge and lens is obtained.

Finally, it is expedient, as disclosed in claim 5, to provide the fitting ends of the frame with a soft coating in that the frame's possibility of absorbing twists and bends will be improved at no risk of breaking the lens.

### The drawings

In the following the invention will be described in further detail with reference to the drawings, in which
fig. 1 shows a pair of spectacles according to the invention,
fig. 2 shows the first hinge portion of the spectacles,
fig. 3 shows the second hinge portion of the spectacles,
fig. 4 shows the joined hinge portions,
fig. 5 also shows the joined hinge portions,
fig. 6 shows the joined hinge portions in turned position, and
fig. 7 shows the bridge secured to the lens.

### Description of the example embodiment

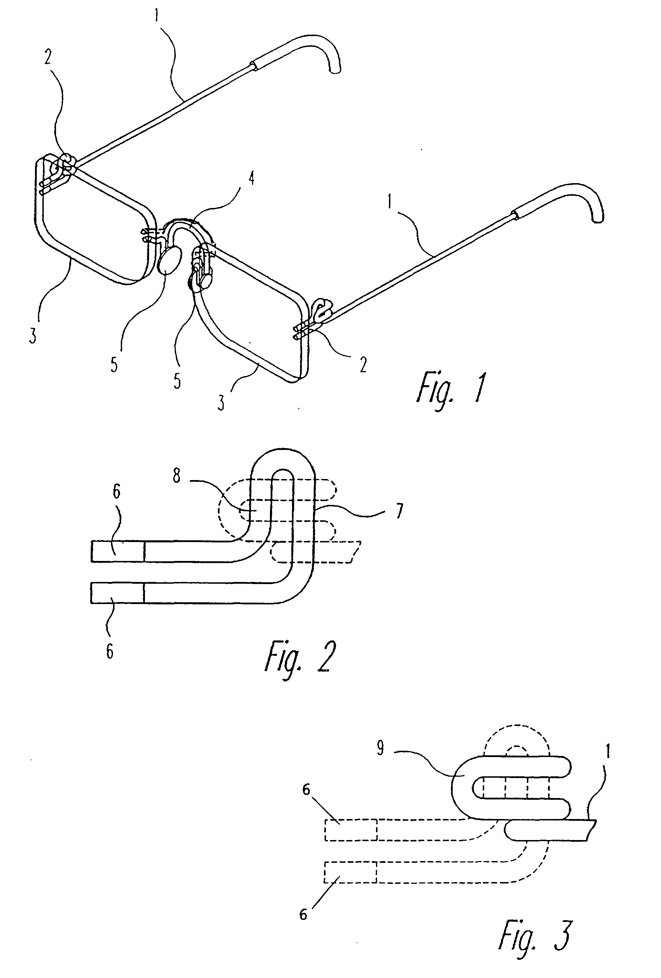

Fig. 1 shows an example of a pair of spectacles according to the invention.

Two lenses 3 are connected to each other by a bridge 4 with nose pads 5. The lenses 3 may be made of glass but in the preferred embodiment they are made of plastic materials which permit the lenses to obtain a very low own weight. The lenses 3 are each provided with a side bar 1 by means of a hinge 2. The side bars 1, hinges and bridge 4 are made of a suitable metal wire.

Fig. 2 shows the hinge 2, where one portion of the hinge is emphasized. In the following the emphasized portion of the hinge is referred to as the first hinge portion. In the preferred embodiment the first hinge portion consists of two substantially parallel fitting ends 6. which are bent at right angles to form a pintle portion 7 and a first contact portion 8, respectively. The two latter parts are connected by an upper or lower end. As will appear from the preferred embodiment, the first hinge portion will be configured in one piece.
The pintle portions 7 can be provided with a coating of silicone or a similar wearing coating to secure a suitable friction in the hinge.

The fitting ends 6 are configured so that these are not shortened to the required length until fitted to the lens 3. In this manner the first hinge portion can be adapted to any required thickness of the lens 3.

Fitting ends can be fitted to a lens 3 with corresponding holes for instance by gluing, embedding or riveting.

In order to safeguard the lenses, a soft rubber coating of silicone rubber or the like can be applied to the fitting ends before they are inserted and secured in the holes in the lens. This protects the lenses from damage caused by bending or twisting of the frame.

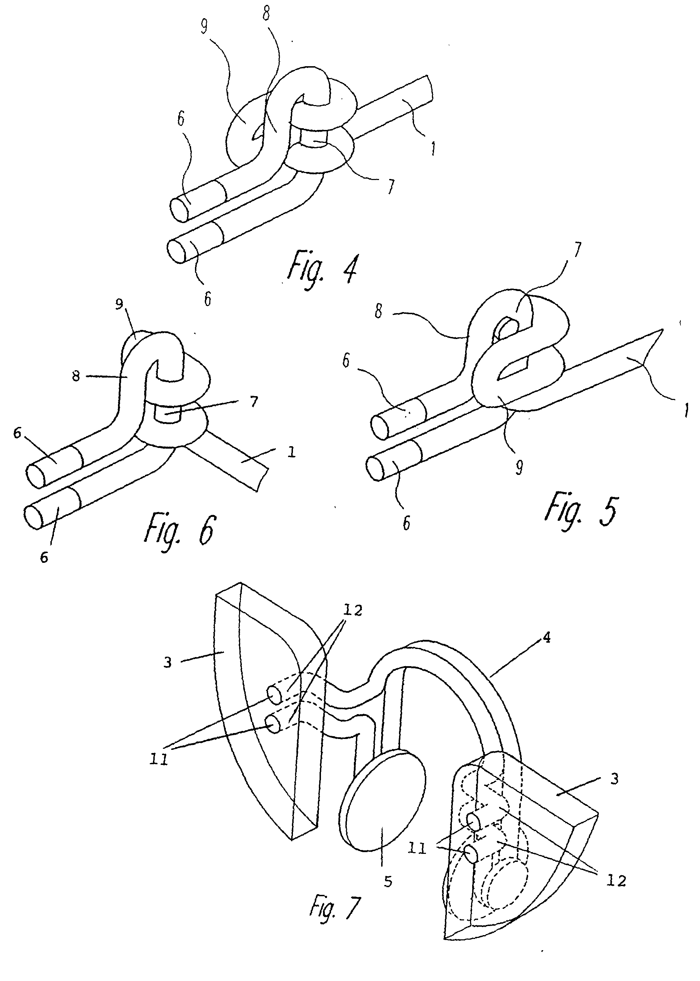

Fig. 3 shows the hinge 2, where the second portion of the hinge is emphasized. In the following the emphasized portion is referred to as the second hinge portion. The second hinge portion is integral with the side bar 1, the side bar at a distance from its end point being bend to form a surrounding part consisting of two oppositely looped loops being separated by a second contact portion 9 which thus forms the end point of the side bar 1.

Fig. 4 shows the joined hinge in perspective in that the surrounding part of the second hinge portion surrounds the pintle portion 7 of the first hinge portion. The two hinges are at their maximum turning angle in that the first contact portion 8 abuts the second contact portion 9 and thus prevents further turning.

Fig. 5 shows the same hinge in perspective seen from the abutment side, also at maximum turning angle.
Fig. 6 also shows the same hinge in the same perspective as in fig. 4. However, the hinge is turned 90°.

Finally, an example of a bridge is shown in fig. 7. The bridge 4 is made from two pieces of wire which are curved at the middle for the formation of the nose bridge. The wires are permanently adjacent and at their ends bent in an angle in such a manner that the front piece of wire is secured by the end pieces 11 in the holes 12, while the rear piece of wire extends in a lower curve and with its end pieces 11 secured in underlying holes 12. The nose pads 5 are secured in the curves.

The end pieces 11 may likewise be provided with a soft rubber coating corresponding to that of the fitting ends 6 on the frame.

Thus, a stable bridge is obtained which does not turn in relation to the lenses and which can be fitted into holes corresponding to the holes of the hinge ends. This simplifies the fitting of the spectacles and gives them a uniform appearance.

## Claims

1. Spectacles, consisting of a frame formed by two lenses (3) which are connected to each other by a bridge (4) and are each provided with a side bar (1) which is pivotally secured to the lens (3) by a hinge (2), which hinge consists of a first hinge portion being mounted on the lens (3), and a second hinge portion being connected with or being part of the side bar (1), and in which the first and second hinge portions are held pivotally secured to each other in that the first hinge portion comprises a pintle portion (7) with an upper and a lower end (6), which pintle portion (7) is surrounded by a surrounding part which is part of the second hinge portion, so that the second hinge portion can turn around the pintle portion, so that the pintle portions (7) of the hinges (2) in the position of use of the spectacles have substantially vertical axes, **characterized in that** the upper and lower ends (6), of the pintle portion (7) of the first hinge portion extend parallel to each other and are fitted in the lens in a point of fixture in the lens (3), where the ends (6) are bent at substantially a right angle, form the pintle portion (7) and a first contact portion (8) which substantially extends parallel to the pintle portion (7), and **in that** the surrounding part consists of at least two loops which are oppositely looped, which loops are connected to each other by a connecting part (9) extending in a direction perpendicular to the side bar (1), whereby the connecting part forms a second contact portion (9) which abuts against the first contact portion (8) at the maximum turning angle of the side bar when the planes of the side bar (1) and the pintle portion and the first contact portion are substantially coincident.

2. Spectacles according to claim 1, **characterized in that** the first and second hinge portions are each configured from one piece of metal wire, wherein the pintle portion (7) and the first contact portion (8), respectively, are joined each other by an angular bend of the metal wire to form an upper or lower end of the first hinge portion, and **in that** the distance between the first contact portion (8) and the pintle portion (7) is between 1 and 2 times the thickness of the metal wire.

3. Spectacles according to claims 1 or 2, **characterized in that** the fitting ends (6) are directly riveted or glued to the lenses (3) and **in that** the fitting ends (6) are passed through pre-prepared holes (10) in these.

4. Spectacles according to claims 1-3, **characterized in that** the bridge (4) comprises two adjacent wire pieces which immediately before their ends have an angular bend for the formation of fitting ends (11) being secured in holes (12) in the spectacle lens (3).

5. Spectacles according to claims 3 and 4, **characterized** in that the upper and lower ends (6) and the fitting ends (11) are provided with a resilient bushing of soft plastic or a similar material, which bushing abuts the internal sides of the holes (12).

## Patentansprüche

1. Brille, bestehend aus einem Rahmen, der durch zwei Linsen (3) ausgebildet ist, die miteinander über eine Brücke (4) verbunden sind und jede mit einem Seitenbügel (1) versehen ist, der drehbar an der Linse (3) über ein Scharnier (2) gesichert ist, das Scharnier besteht aus einem ersten Scharnierbereich, der an der Linse (3) befestigt ist und einem zweiten Scharnierbereich, der mit dem Seitenbügel (1) verbunden oder Teil davon ist und bei dem der erste und zweite Scharnierbereich dadurch drehbar sicher aneinander gehalten werden, dass der erste Scharnierbereich einen Zapfenbereich (7) mit einem oberen und einem unteren Ende (6) aufweist, der Zapfenbereich (7) umgeben von einem Umlagerungsbereich ist, der Teil des zweiten Scharnierbereiches ist, so dass der zweite Scharnierbereich um den Zapfenbereich drehen kann, so dass die Zapfenbereiche (7) der Scharniere (2) in der Gebrauchsstellung der Brille im wesentlichen vertikale Achsen aufweisen, **dadurch gekennzeichnet, dass** die oberen und unteren Enden (6) des Zapfenbereiches (7) des ersten Scharnierbereiches sich parallel zueinander erstrecken und in der Linse in einem Haltepunkt in der Linse (3) eingepasst sind, wo die Enden (6) in einem im wesentlichen rechten Winkel gebogen sind, um den Zapfenbereich (7) und einen ersten Kontaktbereich (8) zu bilden, der sich im wesentlichen parallel zu dem Zapfenbereich (7) erstreckt und dass der Umgebungsbereich aus zumindest zwei Schlaufen besteht, die gegenläufig zur Schlaufe verbunden sind, die Schlaufen sind miteinander über einen Verbindungsbereich (9) verbunden, der sich in einer Richtung senkrecht zu den Seitenbügeln (1) erstreckt, wobei der Verbindungsbereich einen zweiten Kontaktbereich (9) ausbildet, der gegen den ersten Kontaktbereich (8) bei dem maximalen Drehwinkel des Seitenbügels anstößt, wenn die Ebenen des Seitenbügels (1) und des Zapfenbereiches und des ersten Kontaktbereiches im wesentlichen übereinstimmen.

2. Brille nach Anspruch 1, **dadurch gekennzeichnet, dass** der erste und zweite Scharnierbereich jeweils aus einem Stück Metalldraht ausgebildet sind, wobei der Zapfenbereich (7) und der erste Kontaktbereich (8) miteinander über einen winkligen Bogen des Metalldrahtes verbunden sind, um ein oberes oder unteres Ende des ersten Scharnierbereiches zu bilden und dass die Entfernung zwischen dem ersten Kontaktbereich (8) und dem Zapfenbereich (7) ein- bis zweimal der Dicke des Metalldrahtes beträgt.

3. Brille nach Anspruch 1 oder 2, **dadurch gekennzeichnet, dass** die Einbauenden (6) unmittelbar mit den Linsen (3) vernietet oder verklebt sind und dass die Einbauenden (6) durch vorbereitete Löcher (10) in diese eingeschoben sind.

4. Brille nach den Ansprüchen 1 bis 3, **dadurch gekennzeichnet, dass** die Brücke (4) zwei angrenzende Drahtstücke aufweist, die unmittelbar vor ihren Enden eine winklige Biegung zum Bilden von Einbauenden (11) aufweisen, die in Löchern (12) in der Brillenlinse (3) gesichert sind.

5. Brille nach den Ansprüchen 3 und 4, **dadurch gekennzeichnet, dass** die oberen und unteren Enden (6) und die Einbauenden (11) mit einer federnden Buchse aus weichem Kunststoff oder einem ähnlichen Material versehen sind, die Buchse liegt an den inneren Seiten der Löcher (12) an.

## Revendications

1. Lunettes, consistant en une monture formée par deux verres (3) qui sont reliés l'un à l'autre par une arcade (4) et qui sont chacun pourvu d'une branche latérale (1), fixée de manière pivotante au verre (3) par une charnière (2), laquelle charnière consiste en une première partie formant charnière, qui est montée sur le verre (3), et en une deuxième partie formant charnière, qui est reliée ou qui est d'un seul tenant avec la branche latérale (1), et dans lesquelles les première et deuxième parties formant charnière sont fixées l'une à l'autre de manière à pouvoir pivoter, en ce que la première partie formant charnière comprend une partie formant broche centrale (7) qui présente une extrémité supérieure et une extrémité inférieure (6), cette partie formant broche centrale (7) étant entourée par une partie, qui l'entoure et qui appartient à la deuxième partie formant charnière, de telle sorte que la deuxième partie formant charnière puisse tourner autour de la partie formant broche centrale, si bien que les parties formant broches centrales (7) des charnières (2) ont, dans la position d'utilisation des lunettes, des axes sensiblement verticaux, **caractérisées en ce que** les extrémités supérieure et inférieure (6) de la partie formant broche centrale (7) de la première partie formant charnière s'étendent parallèlement l'une à l'autre et sont montées dans le verre en un point de fixation prévu dans le verre (3), où les extrémités (6) sont coudées sensiblement à angle droit pour constituer la partie formant broche centrale (7), et une première partie de contact (8), qui s'étend sensiblement parallèlement à la partie formant broche centrale (7), et **en ce que** la partie qui entoure cette dernière consiste en au moins deux boucles qui sont à enroulements opposés, lesquelles boucles sont reliées l'une à l'autre par une partie de jonction (9) qui s'étend dans une direction perpendiculaire à la branche latérale (1), si bien que la partie de jonction forme une deuxième partie de contact (9), qui vient en butée contre la première partie de contact (8), à l'angle de pivotement maximal de la branche latérale, lorsque les plans de la branche latérale (1) et de la partie formant broche centrale et de la première partie de contact coïncident sensiblement.

2. Lunettes selon la revendication 1, **caractérisées en ce que** les première et deuxième parties formant charnière sont conformées chacune à partir d'un seul morceau de fil métallique, la partie formant broche centrale (7) et la première partie de contact (8), respectivement, étant reliées l'une à l'autre par un cintrage angulaire du fil métallique pour former une extrémité supérieure ou inférieure de la première partie formant charnière, et **en ce que** la distance entre la première partie de contact (8) et la partie formant broche centrale (7) représente entre 1 et 2 fois l'épaisseur du fil métallique.

3. Lunettes selon la revendication 1 ou 2, **caractérisées en ce que** les extrémités de montage (6) sont directement rivetées ou collées sur les verres (3) et **en ce que** les extrémités de montage (6) passent dans des trous (10) préalablement préparés dans ces verres.

4. Lunettes selon les revendications 1 à 3, **caractérisées en ce que** l'arcade (4) comprend deux pièces adjacentes en fil métallique qui sont fixées dans des trous (12) ménagés dans les verres des lunettes (3), immédiatement avant que leurs extrémités ne soient soumises à un cintrage angulaire pour la formation des extrémités de montage (11).

5. Lunettes selon les revendications 3 et 4, **caractérisées en ce que** les extrémités supérieure et inférieure (6) et les extrémités de montage (11) sont pourvues d'une garniture élastique en une matière plastique tendre ou en une matière similaire, laquelle garniture vient en butée contre les bords internes des trous (12).
